# EUROPEAN PATENT APPLICATION

(11) **EP 1 279 710 A2**
(43) Date of publication of application: **29.01.2003**
(21) Application number: 02016103.0
(22) Date of filing: 19.07.2002
(51) Int. Cl.: C09J 7/02

(54) **Laminate film, production method of the same, lamination method of the same, and print using the same**

(30) Priority: 25.07.2001 JP 2001225121
(71) Applicant: CANON KABUSHIKI KAISHA, Ohta-ku, Tokyo (JP)
(72) Inventor: Kobayashi, Masaya, Ohta-ku, Tokyo (JP); Miura, Yasushi, Ohta-ku, Tokyo (JP); Iwata, Tetsu, Ohta-ku, Tokyo (JP)
(74) Representative: Weser, Wolfgang, Dr. Dipl.-Phys.

(57) **Abstract**

A laminate film is provided which has a protective layer formed on a heat-resistant substrate. Even when wound in a rolled form and placed in a high-temperature environment, the laminate film is free of stickiness at the heat-resistant substrate and is also capable of producing a print with high image definition. The protective layer has a surface coat and an adhesive coat superimposed in turn on the heat-resistant substrate. The adhesive coat contains an adhesive resin material and beads having a standard deviation of not more than 10 in terms of their particle diameter distribution.

## Description

### BACKGROUND OF THE INVENTION

### Field of the Invention

The present invention relates to laminate films having a protective layer superimposed on a heat-resistant substrate. More particularly, the invention relates to a laminate film that can be applied to a method in which the protective layer disposed on the heat-resistant substrate is thermocompression-bonded to a record member and, upon peeling of the substrate, forms a coat for protecting the record member, and further to a method of producing this laminate film, a method of laminating this laminate film, and a print obtained using this laminate film.

### Description of the Related Art

If an inkjet recording system were capable of forming images having an image quality comparable to that obtained by silver color photography, or by polychromic printing relying upon various printing processes, the unit cost for image formation would be likely to be cut significantly. In recent years, therefore, a growing demand has been made for the development of such a technique.

In order to form multicolored images by an inkjet recording system that are comparable to those produced by silver photography or polychromic printing, a certain method is known as disclosed, for example, in Japanese Patent Laid-Open No. 2001-121609. This method involves using a recording medium in which an ink-receptive layer is disposed on a substrate, the ink-receptive layer containing white porous fine particles such as silica and so on, and laminating a transparent film on the surface of the ink-receptive layer after the formation of images on the recording medium by means of inkjet recording, thereby permitting the image surface to be very glossy and smooth to enhance image definition.

Furthermore, Japanese Patent Laid-Open No. 2000-044901 discloses improving the function of the protective layer itself. To this end, a polymer for use as a protective layer-forming resin is structured in its molecules so as to absorb ultraviolet radiation so that a stable ultraviolet-absorbing layer is formed.

### SUMMARY OF THE INVENTION

However, the present inventors have found some problems with the laminate materials disclosed in the above-cited publications. When each such conventional laminate material is wound in a rolled form, one of two surfaces of the protective layer which is positioned opposite to the other surface bonded in itself to the substrate sticks to part of the laminate substrate that is placed in contact with one such surface of the protective layer and is located outwardly or inwardly by one winding. This is because, in a high-temperature environment, the temperature of the laminate material is higher than the glass transition temperature (hereinafter referred to as "Tg") of the adhesive component used in the protective layer. Hence, the protective layer sometimes fails to serve its inherent function. As a result of the research conducted by the inventors, it has been found that the protective layer of the laminate material is made smooth on the surface during the laminating step, as by coating, in order to prevent air bubbles from developing between the laminate substrate and the object to be laminated thereon. Therefore, the area of contact becomes large between the protective layer and part of the laminate substrate located outwardly or inwardly by one winding when the laminate material is rolled up, consequently causing stickiness. It has also been found that this stickiness can be eliminated by forming the protective layer so as to have an irregular surface, and the irregular surface is attained using an adhesive coat which has been mixed with beads to reduce the contact area between the protective layer and the laminate substrate. In this instance, anti-stickiness is achieved, but the problem arises that the print obtained using a bead-containing laminate is often susceptible to poorer image definition than that obtained using a conventional bead-free laminate. Further extensive studies made by the present inventors have revealed that even when the laminate material is stored under high-temperature and high-humidity conditions, stickiness can be prevented if the beads are controlled to have a standard deviation of not more than 10 in terms of their particle diameter distribution, and moreover, a print can be obtained with the same level of high image quality as in the case where a bead-free laminate film is employed. This finding has led to the present invention. More specifically, one principal object of the present invention is to provide a laminate film that, even when wound in a rolled form and placed in a high-temperature environment, can eliminate stickiness which occurs, due to softening of the constituent materials of the protective layer, with respect to part of the laminate substrate located outwardly or inwardly by one winding, and hence, enables the protective layer to function as desired, producing a print with high image definition.

Therefore, according to a first aspect of the present invention, a laminate film is provided which comprises a heat-resistant substrate, and a protective layer having a surface coat and an adhesive coat and superimposed on the substrate, wherein the adhesive coat comprises an adhesive material and beads, and the beads have a standard deviation of not more than 10 in terms of the particle size distribution thereof.

A second aspect of the invention provides a method for producing a laminate film comprising the steps of providing a heat-resistant substrate, forming a surface coat on the heat-resistant substrate, and forming an adhesive coat by applying a coating liquid. The coating liquid comprises an adhesive resin material and beads having a particle diameter distribution having a standard deviation of not more than 10.

According to a third aspect of the invention, a lamination method is provided which comprises the step of laminating a surface of a record member using the above-specified laminate film.

According to a fourth aspect of the invention, a print is provided which comprises a record member laminated on the surface thereof with the above-specified laminate film.

Meanwhile, Japanese Patent Laid-Open No. 10-279889 discloses that, as a sheet for information record surfaces to be bonded face-to-face by pseudo-thermosensitive bonding for use in contact-type postcards and the like, a thermosensitive adhesive sheet can obtained which is so structured that an inner layer, and an outer layer composed of a thermosensitive adhesive resin are formed on both surfaces of a plastic sheet by means of hot-melt extrusion, wherein at least either side of the outer layer contains spherical beads. However, nothing is disclosed in that publication as to the image definition of a print having such an adhesive sheet bonded thereto. In this respect, examination has been made by the present inventors, and it has been found that the resin layer formed by hot-melt extrusion is generally rough on the surface and less liable to cause stickiness during storage of the adhesive sheet.

Further objects, features and advantages of the present invention will become apparent from the following description of the preferred embodiments with reference to the attached drawings.

### BRIEF DESCRIPTION OF THE DRAWINGS

Fig. 1 is a schematic view explaining the method for laminating a protective layer on a record member using the laminate film according to the present invention.

Fig. 2 is a cross-sectional view showing the laminate film of the invention.

Fig. 3 is a graph representing the particle size distribution of crosslinked acrylic particles MR-20G produced by Soken Chemical & Engineering Co., Ltd.

Fig. 4 is a diagram showing the method for producing a laminate film according to the invention.

### DESCRIPTION OF THE PREFERRED EMBODIMENTS

Prior to the description of embodiments, the present invention will now be described with regard to the method for laminating a protective layer on a record member.

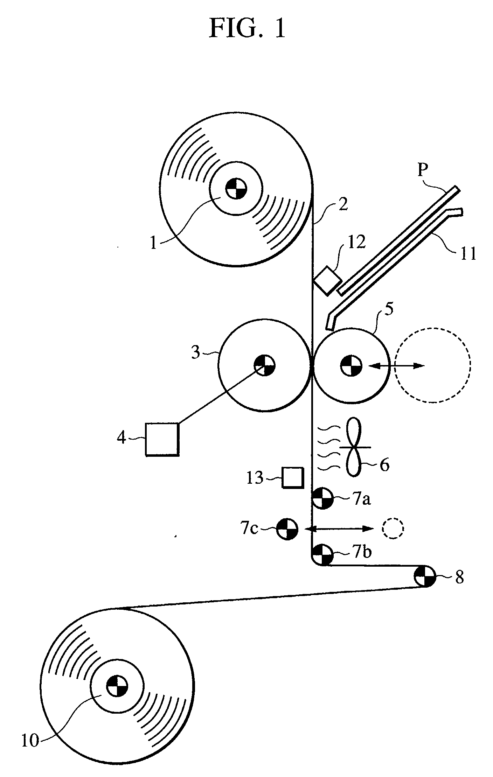

Fig. 1 shows, as schematically viewed, a method for laminating a protective layer on a record member using the laminate film according to the invention.

In Fig. 1, the reference numeral 1 designates an unwinding reel which unwinds a laminate film 2 from a roll of a laminate film wound with a protective layer turned up and places the laminate film 2 in tensioned condition in an unwinding direction (in Fig. 1, due to a torque in a clockwise direction which is hereinafter referred to as "CW"). Reference numeral 3 denotes a heating roll provided on its axial line with a rotary encoder 4 for detecting the rate of rotation of the film-wound roll. Reference numeral 5 denotes a pressure roll for forcedly pressing the laminate film 2 against the heating roll 3, and this pressing step is performed preferably at a linear pressure of 5 to 50 N/cm, particularly preferably 15 to 35 N/cm. Reference numeral 6 denotes a cooling fan for cooling the protective layer and record member P that have been thermocompression-bonded to each other by the paired rolls 3 and 5. Reference numerals 7a and 7b denote fixed guides for a rear end-peeling mechanism which rotate axially freely, whereas 7c denotes a movable peeling axis of the rear end-peeling mechanism that acts to rapidly push out the rear end of the record member P thermocompression-bonded to the laminate film 2 with the protective layer interposed therebetween, thereby peeling the rear end of the record member P from the laminate film 2. Reference numeral 8 denotes a guide for a front end-peeling mechanism, and the record member P thermocompression-bonded to the laminate film 2 with the protective layer interposed therebetween is passed through the rear end-peeling mechanism so that the front end of the record member P is peeled from the laminate film 2 owing to the difference in rigidity between the record member and the laminate film. Reference numeral 10 denotes a reel that winds a used laminate film 2 and places the same in tensioned condition in a winding direction (CCW). Reference numeral 11 denotes a guide for the record member P, 12 a photo interrupter constituting a first paper-transit sensor and 13 a photo interrupter constituting a second paper-transit sensor.

The record member P is inserted into the guide 11, and upon generation of a signal detecting "paper present" from the first paper-transit sensor 12, the pressure roll 5 works to press-contact with the heating roll 3, while the heating roll 3 commences CCW rotation. To effect this rotation, the linear speed may be chosen from a range of about 5 to 40 mm/s, but a range of 10 to 30 mm/s is preferred. The record member P is thermocompression-bonded, by the paired rolls 3 and 5, to the laminate film 2 with the protective layer interposed therebetween. The rotary encoder 4 of the heating roll 3 monitors the angular position between the angle of the heating roll where the change of signals from "paper present" to "paper absent" is detected by the second paper-transit sensor 13 and the angle of the heating roll where the rear end of the record member is allowed to reach the rear end-peeling mechanism. At this angular position, the rear end of the record member is peeled by the movable peeling axis 7c of the rear end-peeling mechanism. Thus, the record member P is peeled at its rear end together with the protective layer from the laminate film 2. Thereafter, upon detection of "paper absent" by the second paper-transit sensor, the laminate film is transported by the length needed to complete paper delivery. This film transport is also performed by the rotary encoder 4 that monitors the rotation rate of the heating roll 3 between the time when the rear end of the paper is passed through the second paper-transit sensor and the time when the laminate film is transported by the length needed to complete paper delivery. The record member is peeled when the boundary area is severed between part of the protective layer bonded by greatly rigid materials of the record member and part of the protective layer bonded to the laminate film to the latter member at a hair pin bend along which the record member is run after being passed through the rear end-peeling mechanism. And so the rear end has been already peeled, and it does not happen that the protective layer bonded to the laminate film and around the record member cannot be severed and is peeled as connected around the record member.

Here, the laminate layer located between the position where the heating roll 3 is located and the position where the front end-peeling mechanism is located can be reused since it has been heated only at its portion nipped between the rolls 3 and 5. To rewind this unused laminate layer toward the heating roll 3, the heating roll 3 is rotated in a CCW direction at an angle set to correspond to the length of the laminate layer to be rewound. The heating roll 3 is then brought to a standstill.

After the heating roll 3 is brought to a standstill, the movable pressure roll 5 is retracted into an inoperative position.

Next, the present invention will be described with regard to preferred embodiments.

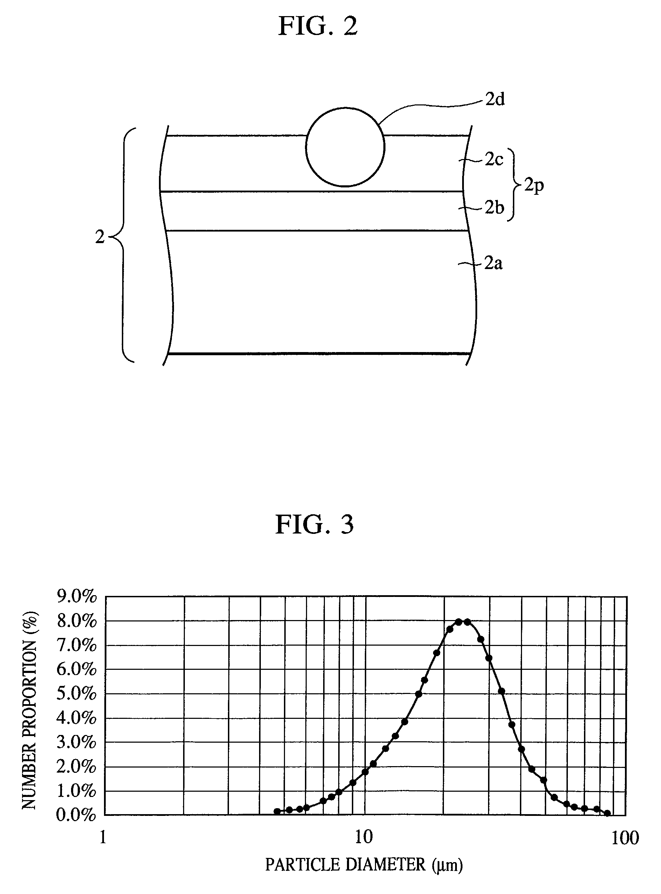

Fig. 2 shows, as viewed cross-sectionally, the laminate film according to the invention. The laminate film 2 comprises a heat-resistant substrate 2a and a protective layer 2p superimposed thereon. The protective layer 2p has a surface coat 2b and an adhesive coat 2c disposed in this order. Beads 2d are applied along with an adhesive resin material used to constitute the adhesive coat 2c.

The laminate film of the invention can be formed as described below.

### Heat-Resistant Substrate

Suitable heat-resistant substrates are those that can maintain a stable shape under thermocompression-bonding conditions and also under hot-pressing conditions, and moreover, can be easily peeled when the protective layer is formed on the recording layer of a record member. As the heat-resistant substrate, films or sheets can be used which are derived from, for example, polyesters such as polyethylene terephthalate (hereinafter referred to as "PET"), polyethylene terephthalate-isophthalate copolymer, polybutylene terephthalate and the like, polyolefins such as polypropylene and the like, polyamide, polyimide, triacetyl cellulose, polyvinyl chloride, vinylidene chloride-vinyl chloride copolymer, acrylic resin, polyether sulfone and so on.

The thickness of the heat-resistant substrate is not particularly restricted, but can be chosen preferably from a range of 5 to 50 µm, more preferably 10 to 40 µm, from the viewpoints of economical efficiency and crease resistance.

On a side where the protective layer is formed, the heat-resistant substrate may be surface-roughened by embossing or sandblasting, or with a fine particle-containing resin coat.

In the case where the heat-resistant substrate is not surface-roughened, the laminate film of the present invention is bonded to the record member, and upon peeling of the heat-resistant substrate, a glossy protective layer-laminated record member is obtained. On the other hand, the use of the surface-roughened heat-resistant substrate gives a semigloss- or matt-finished protective layer-laminated record member.

### Surface Coat

No particular restriction is imposed on the resin material used to constitute the surface coat of the laminate film according to the present invention. For example, resins containing polymeric substances such as acrylic resin, styrene resin, vinyl chloride resin, vinyl acetate resin or the like can be used on condition that they can be applied by means of coating.

Suitable examples of the acrylic resin are homopolymers of (meth)acrylate esters or copolymers of these esters and copolymerizable monomers (hereinafter referred to as "(meth)acrylate ester polymers"). Here, the term "(meth)acrylate ester" means an acrylate ester or a methacrylate ester.

Specific examples of (meth)acrylate esters, which can be used to produce the (meth)acrylate ester polymers specified above, are alkyl ester monomers chosen from methyl (meth)acrylate, ethyl (meth)acrylate, isopropyl (meth)acrylate, n-butyl (meth)acrylate, n-hexyl (meth)acrylate, n-octyl (meth)-acrylate, 2-ethylhexyl (meth)acrylate, isononyl (meth)-acrylate, lauryl (meth)acrylate and so on. These (meth)-acrylate ester monomers may be used singly, or may be combined with other different monomers that copolymerize with the former monomers in order to produce the above-mentioned (meth)acrylate ester polymers.

Specific examples of the other different monomers, which can be copolymerized with the (meth)acrylate esters listed earlier, are chosen from unsaturated carboxylic acids such as (meth)acrylic acid, crotonic acid, maleic acid, fumaric acid, itaconic acid and the like; hydroxyl group-containing monomers such as hydroxyethyl (meth)acrylate, hydroxypropyl (meth)acrylate, hydroxybutyl (meth)acrylate and the like; alkoxy group-containing monomers such as methoxyethyl (meth)acrylate, ethoxyethyl (meth)acrylate and the like; glycidyl group-containing monomers such as glycidyl (meth)acrylate, allylglycidyl ether and the like; cyano group-containing monomers such as acrylonitrile and the like; styrene monomers such as styrene, α-methylstyrene and the like; aromatic ring-containing monomers such as phenyl (meth)acrylate, benzyl (meth)acrylate and the like; amide group-containing monomers such as (meth)acrylamide and the like; N-alkoxy group-containing monomers; N-alkoxyalkyl group-containing monomers such as N-methoxymethyl (meth)acrylamide, N-methoxyethyl (meth)acrylamide and the like; N-alkylol group-containing monomers such as N-methylol (meth)acrylamide, N-butylol (meth)acrylamide and the like; halogenated vinyl monomers such as vinyl fluoride, vinyl chloride, vinyl bromide and the like; halogen atom-attached monomers such as allyl chloride, 2-chloroethyl (meth)acrylate, chloromethyl styrene and the like; and olefin monomers such as ethylene, propylene, butadiene and the like.

The (meth)acrylate ester polymers are composed of the reactive functional group-containing monomeric components mentioned above. Thus, such polymers may be used by being partially crosslinked by aid of these functional groups.

The styrene resin used to constitute the surface coat 2b of the laminate film of the present invention includes, for example, Vinyblan 2730 (trade name) produced by Nisshin Chemical Industry Co., Ltd.

The vinyl chloride resin used to constitute the surface coat 2b of the laminate film of the invention includes, for example, Vinyblan 270 (trade name) produced by Nisshin Chemical Industry Co., Ltd.

The vinyl acetate resin used to constitute the surface coat 2b of the laminate film of the invention includes, for example, Vinyblan 1122 (trade name) produced by Nisshin Chemical Industry Co., Ltd. To form the surface coat 2b, aqueous dispersions of resin materials can be used as coating liquids. These dispersions may be prepared, for example, from an emulsion of the above-mentioned polymeric substance produced by emulsion polymerization, or an aqueous dispersion (emulsion being also included) produced by synthesizing this polymeric substance in advance, suspending or emulsifying the same, and then dispersing the resultant suspension or emulsion in water or an aqueous medium. Alternatively, a coating liquid prepared by dissolving the above-mentioned polymeric substances in a solvent may be practically used so long as it meets the requirements of surface protection. Of these coating liquids, an aqueous dispersion of the resin material prepared from an emulsion of the polymeric substance is preferred.

The aqueous dispersion of the resin material, which is prepared from the above emulsion and can be used to form the surface coat 2b in the laminate film of the present invention, can be produced in a generally well-known manner. Commercially available materials may of course be used.

The surface coat 2b in the laminate film of the invention should be thick enough to prevent stress cracking, but not so thick as to impair peeling efficiency along the periphery of the record member. In general, the thickness may be set in the range of 1 to 10 µm, preferably 2 to 8 µm, more preferably 3 to 6 µm.

### Adhesive Coat

The adhesive coat 2c in the laminate film of the present invention may be formed by applying a coating liquid prepared to contain an emulsion of a polymeric substance, followed by drying of the resultant coat. A better choice is a coating liquid that softens sufficiently during thermocompression bonding and has a good affinity for the surface of the record member.

Polymeric substances, which can be used as adhesive resin materials to form the adhesive coat 2c in the laminate film of the invention, are chosen from acrylic resin, vinyl acetate resin, vinyl chloride resin, ethylene-vinyl acetate copolymer resin, polyamide resin, polyester resin, polyurethane resin, polyolefin resin and so on. Above all, acrylic resin-containing adhesive resins are particularly preferred in view of the transparency of the adhesive coat 2c to be formed. Furthermore, in many cases, prints formed by an inkjet recording system have an ink-receptive layer disposed on the surface of the record member. Also in this instance, acrylic resin emulsion-containing adhesive resin materials have the good affinity with the record member surface where ink is retained in solution form in the ink-receiving layer.

Acrylic monomers, which can be preferably used particularly for preparing the above-mentioned adhesive resin materials, are chosen from alkyl ester monomers such as methyl acrylate, ethyl acrylate, propyl acrylate, isopropyl acrylate, butyl acrylate, isobutyl acrylate, pentyl acrylate, hexyl acrylate, heptyl acrylate, octyl acrylate, 2-ethylhexyl acrylate, nonyl acrylate and the like, and alkoxyalkyl acrylates such as 2-ethoxyethyl acrylate, 3-ethoxypropyl acrylate and the like.

The emulsions prepared to contain polymeric substances such as the above-mentioned acrylic resins and the like may be produced in a generally well-known manner.

In order to adjust the cohesive force of the adhesive coat 2c, methacrylate monomer, vinyl acetate, styrene, acrylonitrile or (meth)acrylamide may be used as a copolymerizable component. As an alternative means of adjustment of the cohesive force, a hydroxyl group-containing monomer such as 2-hydroxyethyl (meth)acrylate, 2-hydroxypropyl (meth)-acrylate or the like, or a carboxyl group-containing monomer such as (meth)acrylic acid or the like may be introduced in the polymer in such a manner that such active hydrogen is utilized to effect partial crosslinking with isocyanate, block isocyanate, epoxy or the like.

For the protective layer 2p to be laminated with the maximum ease and minimal energy by the use of the laminate film of the present invention, it is desired that the adhesive resin material for use in constituting the adhesive coat 2c have a low Tg. More specifically, the Tg of the adhesive resin material used to constitute the adhesive coat 2c is set to be preferably lower than 30°C, more preferably lower than 25°C, still more preferably lower than 20°C. The Tg parameters may be easily adjusted by suitable choice, from among the adhesive resin materials, of a polymeric substance with a desired Tg.

The adhesive coat 2c in the laminate film of the invention is preferably thick enough to sufficiently closely contact the ink-receptive layer of the record member and to prevent air bubbles from forming. The thickness of the adhesive coat 2c is preferably in the range of 2 to 30 µm, more preferably 4 to 20 µm. The upper thickness limit may be decided by taking into account image sharpness to be externally observed through the protective layer 2p and cost performance.

### Beads

Beads, which can be contained in the adhesive coat 2c of the laminate film of the present invention, are preferably made of materials with a refractive index approximating that of the adhesive resin material used to make the adhesive coat 2c. The difference in refractive index between the material used for the beads and the adhesive resin material used for the adhesive coat 2c is preferably not more than 0.2, more preferably not more than 0.1, in terms of the absolute value. Moreover and desirably, the beads are contained only in the adhesive coat from the viewpoints of the effect of eliminating stickiness and the impact on the image quality of a print after being laminated.

Furthermore, the beads to be contained in the adhesive coat 2c in the laminate film of the invention are preferably made of materials with higher Tgs than room temperature. The reason for this is that the beads are used to permit the laminate film of the invention to achieve its inherent function such that the protective layer 2p does not become sticky with respect to the heat-resistant substrate located opposite thereto when the laminate film is wound in a rolled form and placed in a high-temperature environment.

When the acrylic resin is used as the adhesive resin material for the adhesive coat 2c in the laminate film of the invention, the beads are preferably an acrylic resin having a refractive index near to that of the former acrylic resin.

The beads suitably used in the invention, for example, the beads of the above acrylic resin material, can be produced in a generally well-known manner. Obviously, commercially available beads may be used which include, for example, Chemisnow MR-20G (trade name, product of Soken Chemical & Engineering Co., Ltd.; number-average particle diameter: 22.5 µm, standard deviation: 12.0) and Chemisnow MR-30G (trade name, product of Soken Chemical & Engineering Co., Ltd., number-average particle diameter: 30.1 µm, standard deviation: 15.3). The particle diameter distributions of these beads generally show normal distributions around the number-average particle diameters. The particle diameter is measured by a commercial particle diameter distribution system (LS 236, manufactured by Beckman Coutir, etc.).

When the beads are contained in the adhesive coat of the laminate film, the laminated print sometimes suffers irregular reflection on the surface due to the influence of the beads, adversely affecting the image definition, glossiness and so on. This is particularly true of and a serious problem for prints having records such as photographic images and the like laminated thereon.

For a print obtained by lamination to have the same level of image definition as does a print obtained using a bead-free laminate film, the beads should have a standard deviation of not more than 10, preferably not more than 9, in terms of their particle diameters. It has been confirmed that standard deviations of more than 10 are responsible for noticeable irregular reflection and hence reduced image definition.

In addition, in order to accomplish good image definition, the number-average particle diameter of the beads is preferably not larger than 2.5 times the thickness of the adhesive coat. Meanwhile, for good blocking resistance to be obtained, the number-average particle diameter of the beads is set to be preferably larger than the thickness of the adhesive coat, and more preferably, the number-average particle diameter of the beads exceeds 1.5 times the thickness of the adhesive coat.

Fig. 3 shows, as one example of the beads, the particle diameter distribution of crosslinked acrylic particles MR-20G produced by Soken Chemical & Engineering Co., Ltd.

To avoid stickiness, the amount of the beads to be added is preferably more than 0.1% by mass based on the weight of all the materials used to constitute the adhesive coat 2c. On the other hand, the bead content is preferably not more than 5% by weight to curb the influences of air bubbles that would be likely to develop during lamination.

A highly light-resistant laminate film will be described below.

The problem of inadequate light-resistance can be solved by adding an ultraviolet absorber in appropriate amounts to at least one of the surface coat 2b and the adhesive coat 2c in the laminate film of the present invention.

Ultraviolet absorbers used in the invention are chosen from 2-hydroxyphenylbenzotriazole compounds, 2-hydroxybenzophenone compounds, 2,4-diphenyl-6-[2-hydroxyphenyl]-s-triazine compounds, salicylate compounds and cyanoacrylate compounds.

The hydrogen atoms attached to the base structure, or the benzene ring structure, in each such compound may be substituted with substituents such as halogen atoms, and alkyl, alkoxy, cyano, nitro and hydroxyl groups and so on.

Furthermore, a polymeric substance structured to have an ultraviolet-absorbing group in the molecular chain may be used in place of the ultraviolet absorber mentioned above, or may be used in combination with the absorber. The polymeric substance having an ultraviolet-absorbing group in the molecular chains is preferable since it only rarely causes performance degradation that would occur due to volatilization or bleeding.

To introduce the ultraviolet-absorbing group into the molecular chain of a polymeric substance, a compound obtained by introducing a reactive group into the benzene nucleus of the above-mentioned ultraviolet absorber may be preferably used as a monomer. A typical example of the reactive group is expressed by the following formula (1).

-X-OOCC(-H or -CH₃)=CH₂ (1)

where X represents a divalent group such as an alkylene or oxyalkylene group having 1 to 12 carbon atoms, or -CH₂C(OH)CH₂.

The compound structured to have the reactive group of formula (1) introduced therein may be polymerized alone, or may be copolymerized with another sort of copolymerizable monomer. Thus, a polymeric substance structured to have an ultraviolet absorber introduced in the molecular chain can be obtained.

Polymeric substances structured to have an ultraviolet absorber introduced in the molecular chain are disclosed in Japanese Patent Laid-Open No. 06-073368 (Ippo Co., Ltd.), Japanese Patent Laid-Open No. 07-126536 (Ippo Co., Ltd.), Japanese Patent Laid-Open No. 09-118720 (Aio Lab Corporation), Japanese Patent Laid-Open No. 11-348199 (Nippon Catalyst Co., Ltd.), Japanese Patent Laid-Open No. 2000-044901 (Ohtuska Chemical Co., Ltd.) and so on.

The laminate film of the present invention can be obtained by applying the coating liquids for the surface coat and adhesive coat in turn on the heat-resistant substrate by coating means such as roll coating, rod-bar coating, spray coating, air-knife coating and slot-die coating.

As the coating liquid for the surface coat, one may be used which is obtained, for example, by diluting the above-mentioned emulsion of the material for the protective layer in toluene-MEK (mixing ratio 1 : 1 by mass : mass), thereby adjusting the solid concentration to a given value.

As the coating liquid for the adhesive coat, one may be used which is obtained, for example, by putting beads into alcohol (ethyl alcohol or isopropyl alcohol) or distilled water, dispersing the beads homogeneously in the solution with stirring apparatus such as a high-speed dispersion unit or the like, and then adding the resultant bead liquid to an emulsion of the material for the protective layer that has been adjusted with respect to the solid concentration to a given value using pure water.

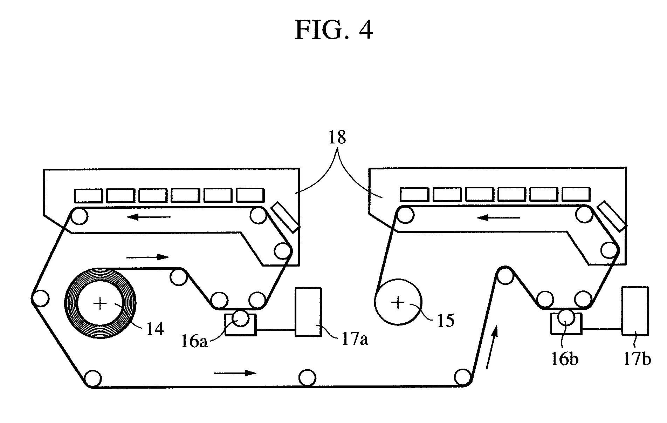

The method for producing a laminate film according to the present invention will be described with regard to one preferred embodiment and with reference to Fig. 4.

In a coating liquid tank 17a, a coating liquid for a surface coat 2b is stored and supplied to a gravure roll 16a via a pipeline. In a coating liquid tank 17b, a coating liquid for an adhesive coat 2c is stored and supplied to a gravure roll 16b via a pipeline.

A starting film is wound off from an unwinding roll 14 and transported to the gravure roll 16a where the surface coat 2b is coated on the film, followed by drying of the coated film in a drier 18. The film discharged from the drier is transported to the gravure roll 16b where the adhesive coat 2c is likewise coated on the film, and then dried in the drier 18, followed by uprolling on a winding roll 15.

The structure of the record member that can be treated by the lamination method according to the present invention is not particularly restricted. The lamination method of the invention can be suitably used for a print obtained by forming images, by an inkjet recording process, on a recording medium comprising a substrate with an ink-receiving layer provided thereon. Inorganic porous particles used to form the ink-receptive layer for such a recording medium are chosen from silica, alumina, magnesium carbonate, silica-alumina mixed crystal, silica-magnesium mixed crystal and so on. Above all, silica is preferred in view of economical efficiency. Suitable examples of silica are Mizuka Sil P-50 and P78 (trade names, produced by Mizusawa Chemical Industries Co., Ltd.).

In addition, in the formation of the ink-receiving layer, binders may be used where desired. For example, water-soluble polymers or emulsions of polyvinyl alcohol, polyvinyl acetate, acrylate polymer and the like are useful. As the mixing ratio of inorganic porous particle to binder, the binder is set, for example, within a range of 30 to 1,000 parts by weight, preferably 50 to 500 parts by weight, based on 1,000 parts by weight of the inorganic porous particles. To the ink-receptive layer, various additives may also be added when needed, which additives include dispersing agents, fluorescent dyes, pH regulators, lubricating agents, surface active agents and so on. The thickness of the ink-receptive layer is preferably chosen, for example, from a range of 30 to 60 µm.

On the other hand, no particular limitation is placed on the system in which inkjet recording is carried out. An electrostatic attraction system, a piezoelectric element-dependent system, a pyrogenic element-dependent system and so on may be used.

Inks for use in inkjet recording are aqueous media which contain coloring materials such as dye, pigment and the like and which are suitable for inkjet recording. In the case of color recording, full color images can be formed, in conventional fashion, by a subtractive process using cyan, magenta and yellow, and also black when needed.

The present invention is further described with regard to the following examples and comparative examples.

### Example 1

Coating liquid 1: Acrylic emulsion T371 (trade name, produced by JSR Co., Ltd.; Tg = 85°C, solid content: 40% by mass) was used as coating liquid 1.

Coating liquid 2: Acrylic emulsion 2706 (trade name, produced by Nisshin Chemical Industry Co., Ltd.; Tg = 21°C, solid content: 50% by mass) was mixed with a 10% bead dispersion prepared by adding 10 parts by mass of beads to 90 parts by mass of ethyl alcohol, such that the above beads (solid content) were contained in an amount of 2 parts by mass based on 100 parts by mass of the above acrylic emulsion solid. The resultant mixture was dispersed into coating liquid 2.

The beads used above were obtained by classifying crosslinked acrylic particles MR-20G (trade name, produced by Soken Chemical & Engineering Co., Ltd.; number-average particle diameter: 22.5 µm) with ultrafine particle classifier PS-80 (produced by Yokohama Rika Corporation), thereby removing crude particles of more than 63 µm in particle diameter. The resultant beads had a standard deviation of 10.0 and a number-average particle diameter of 21.9 µm.

Heat-resistant substrate 1: PET film No. 7 (trade name, produced by Teijin-DuPont Film Co., Ltd.; thickness: 38 µm) was used as heat-resistant substrate 1.

Coating liquid 1 was applied on heat-resistant substrate 1 at a dry film thickness of 5 µm by gravure coating, and drying was effected to form a surface coat. Subsequently, coating liquid 2 was applied at a dry film thickness of 8 µm, and drying was effected to form an adhesive coat. Thus, a laminate film was obtained.

### Example 2

A laminate film was obtained in the same manner as in Example 1 except that the bead content was set at 4 parts by mass based on 100 parts by mass of the acrylic emulsion solid, and coating liquid 2 was applied at a dry film thickness of 15 µm.

### Example 3

Coating liquid 3: Polymeric ultraviolet absorber PUVA 30M (trade name, produced by Ohtsuka Chemical Co., Ltd.; Tg = 90°C) was dissolved in toluene to adjust the solid content to 25%. The resultant liquid was used as coating liquid 3.

Coating liquid 4: Acrylic emulsion 2706 (trade name, produced by Nisshin Chemical Industry Co., Ltd.; Tg = 14°C, solid content: 50% by mass) was mixed with a 10% bead dispersion prepared by adding 10 parts by weight of beads to 90 parts by weight of ethyl alcohol, such that the above beads (solid content) were contained in an amount of 2 parts by weight based on 100 parts by weight of the above acrylic emulsion solid. The resultant mixture was dispersed into coating liquid 4.

The beads used above were obtained by classifying crosslinked acrylic particles MR-20G (trade name, produced by Soken Chemical & Engineering Co., Ltd.; number-average particle diameter: 22.5 µm) with ultrafine particle classifier PS-80 (produced by Yokohama Rika Corporation), thereby removing crude particles of more than 45 µm in particle diameter. The resultant beads had a standard deviation of 8.4 and a number-average particle diameter of 20.5 µm.

Coating liquid 3 was first applied on heat-resistant substrate 1 at a dry film thickness of 5 µm by rod bar-die coating, and drying was effected to form a surface coat. Subsequently, coating liquid 4 was applied at a dry film thickness of 8 µm, and drying was effected to form an adhesive coat. Thus, a laminate film was obtained.

### Example 4

Coating liquid 5: Acrylic emulsion 2706 (trade name, produced by Nisshin Chemical Industry Co., Ltd.; Tg = 14°C, solid content ratio: 50%) and 30 parts by weight (solid content) of UVA-383MG (trade name, produced by BASF Co., Ltd.) were mixed and dispersed to adjust the solid content ratio to 37%. The same bead dispersion as used in Example 1 was then mixed such that the above beads (solid content) were contained in an amount of 2 parts by mass based on 100 parts by mass of the above acrylic emulsion solid. The resultant mixture was dispersed into coating liquid 5.

Coating liquid 1 was first applied on heat-resistant substrate 1 at a dry film thickness of 5 µm by rod bar-die coating, and drying was effected to form a surface coat on which coating liquid 5 was then applied at a dry film thickness of 8 µm, and drying was effected to form an adhesive coat, whereby a laminate film was obtained.

### Example 5

A laminate film was formed in the same manner as in Example 1 except that the bead content in coating liquid 2 was set at 0.08 part by mass based on 100 parts by mass of the acrylic emulsion solid.

### Example 6

Coating liquid 6: Acrylic emulsion 2706 (trade name, produced by Nisshin Chemical Industry Co., Ltd.; Tg = 21°C, solid content: 50% by mass) was mixed with a 10% bead dispersion prepared by adding 10 parts by mass of beads to 90 parts by mass of ethyl alcohol, such that the above beads (solid content) were contained in an amount of 2 parts by mass based on 100 parts by weight of the above acrylic emulsion solid. The resultant mixture was dispersed into coating liquid 6.

The beads used above were obtained by classifying crosslinked acrylic particles MR-30G (trade name, produced by Soken Chemical & Engineering Co., Ltd.; number-average particle diameter: 30.1 µm) with ultrafine particle classifier PS-80 (produced by Yokohama Rika Corporation), thereby removing crude particles of more than 45 µm in particle diameter. The resultant beads had a standard deviation of 9.8 and a number-average particle diameter of 26.0 µm.

Heat-resistant substrate 1: PET film No. 7 (trade name, produced by Teijin DuPont Film Co., Ltd.; thickness: 38 µm) was used as heat-resistant substrate 1.

Coating liquid 1 was applied on heat-resistant substrate 1 at a dry film thickness of 5 µm by slot-die coating, and drying was effected to form a surface coat. Subsequently, coating liquid 6 was applied at a dry film thickness of 12 µm, and drying was effected to form an adhesive coat. Thus, a laminate film was obtained.

### Comparative Example 1

A laminate film was obtained in the same manner as in Example 1 except that the use of beads was omitted.

### Comparative Example 2

A laminate film was obtained in the same manner as in Example 1 except that MR-20G (standard deviation: 12.0, mean particle diameter: 22.5 µm) not classified was used beads. Here, the term "not classified" meant that the MR-20G beads did not undergo classification treatment and so had the particle diameter distribution shown in Fig. 3.

### Comparative Example 3

A laminate film was obtained in the same manner as in Example 1 except that MR-20G classified to have a standard deviation of 11.3 and a mean particle diameter of 22.3 µm was used as beads.

### Comparative Example 4

A laminate film was obtained in the same manner as in Example 2 except that MR-20G (standard deviation: 12.0, mean particle diameter: 22.5 µm) not classified was used as beads.

### Comparative Example 5

A laminate film was obtained in the same manner as in Example 6 except that MR-30G (standard deviation: 15.3, mean particle diameter: 30.1 µm) not classified was used as beads.

The laminate films of Examples 1 to 6 and Comparative Examples 1 to 5 were evaluated for performance with regard to the following characteristics.

### 1. Anti-stickiness

Each laminate film was wound 20 m long with 40 N (per 30-cm film width), and stickiness to the opposite heat-resistant substrate was inspected under condition 1 (standing for 48 hours in 60°C-RH 50% environment) and condition 2 (standing for 240 hours in 50°C-RH 80% environment) and judged by the following criteria. The results are listed in Table 1.
A: not sticky.
B: slightly sticky but practically acceptable.
C: sticky and impractical.

### 2. Image Definition

High-definition color digital standard image data stipulated by ISO, N1.tiff images (ISO/JIS-SCID based on JIS X9201), were printed as images on glazed paper GP-301 (produced by CANON KABUSHIKI KAISHA) using Photoshop image software (produced by Adobe Co., Ltd.). Inkjet printer F-850 (produced by CANON KABUSHIKI KAISHA) was used as a test printer.

Each of the laminate films (stored at 25°C; RH 50%) obtained in Examples 1 to 6 and Comparative Examples 1 to 5 was laminated on the above inkjet records, whereby a print was obtained. This lamination was carried out using the apparatus of Fig. 1. The laminate film was heated by the heating roll at 140°C on the side where the substrate was located, whereas the ψ 50 rubber roll located on the side of the record member was left unheated. Thermocompression bonding was performed under such nip loads as a linear pressure of 30 N/cm and a feed rate of 25 mm/sec so that a print was obtained.

Here, the print obtained using the laminate film of Comparative Example 1 was taken as a reference standard. The print and reference were visually compared by a group of 10 panelists. The results are listed in Table 1.
A: 7 or more panelists judged that the image definition of the print and the reference were almost the same.
B: 4 to 6 panelists judged that the image definition of the print and the reference were almost the same.
C: 3 or fewer panelists judged that the image definition of the print and the reference were almost the same.

### 3. Cracking

Each of the prints obtained in item 2 above was evaluated with regard to cracking by the following criteria. The results are listed in Table 1.
A: not cracked.
B: cracked.

**Table 1**

| | Standard Deviation | Number-Average Particle Diameter | Bead Content | Anti-sticking | | Image Definition | Cracking |
|---|---|---|---|---|---|---|---|
| | | | | Condition 1 | Condition 2 | | |
| Example 1 | 10.0 | 21.9 | 2 | A | A | A | A |
| Example 2 | 10.0 | 21.9 | 4 | A | A | A | A |
| Example 3 | 8.6 | 20.5 | 2 | A | A | A | A |
| Example 4 | 10.0 | 21.9 | 2 | A | A | A | A |
| Example 5 | 10.0 | 21.9 | 0.08 | B | A | A | A |
| Example 6 | 9.8 | 26.0 | 2 | A | A | A | A |
| Comparative Example 1 | - | - | - | C | C | - | A |
| Comparative Example 2 | 12.0 | 22.5 | 2 | A | A | C | B |
| Comparative Example 3 | 11.3 | 22.3 | 2 | A | A | B | A |
| Comparative Example 4 | 12.0 | 22.5 | 4 | A | A | C | B |
| Comparative Example 5 | 15.3 | 30.1 | 2 | A | A | C | B |

As evidenced by the above test results, a laminate film could be obtained without stickiness and cracking as well as with excellent image definition when the standard deviation in particle diameter of the beads was controlled to be not more than 10.

The prints obtained using the laminate films of Examples 3 and 4 were subjected to exposure testing for 100 hours, and the residual color optical densities were then measured by an Atlas fadeometer. The color optical densities of all the inks retained were more than 70%, and hence, the light resistance was found to have been maintained to a satisfactory extent. In Comparative Example 1, the color optical densities of all the inks were 50%, and the color balance was broken.

In the examples and comparative examples, acrylic beads produced by Soken Chemical & Engineering Co., Ltd. were used. However, the present invention should not be construed as being limited to these beads.

The laminate film of the present invention, which is structured to have a protective layer superimposed on a heat-resistant substrate, is prevented from sticking to the heat-resistant substrate even when it is placed in a high-temperature environment. Also preferably, this laminate film produces a print with high image definition.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A laminate film comprising a heat-resistant substrate, and a protective layer having a surface coat and an adhesive coat and superimposed on the substrate, wherein the adhesive coat comprises an adhesive resin material and beads, and the beads have a particle diameter distribution having a standard deviation of not more than 10.

2. A laminate film according to Claim 1, wherein the beads are contained in an amount of 0.1 to 5 parts by mass based on 100 parts by mass of the adhesive resin material.

3. A laminate film according to Claim 1 or 2, wherein the adhesive resin material has a glass transition temperature not higher than 30°C.

4. A laminate film according to one of Claims 1 to 3, wherein the adhesive resin material is at least one polymeric substance selected from the group consisting of acrylic resin, vinyl acetate resin, vinyl chloride resin, ethylene-vinyl acetate copolymer resin, polyamide resin, polyester resin, polyurethane resin and polyolefin resin.

5. A laminate film according to one of Claims 1 to 4, wherein the adhesive resin material is acrylic resin.

6. A laminate film according to one of Claims 1 to 5, wherein the adhesive resin material comprises a polymeric substance having an ultraviolet-absorbing group.

7. A laminate film according to one of Claims 1 to 6, wherein the surface coat comprises a resin material containing a polymeric substance having an ultraviolet-absorbing group.

8. A laminate film according to one of Claims 1 to 7, wherein the number-average particle diameter of the beads is larger than the thickness of the adhesive coat.

9. A laminate film according to one of Claims 1 to 8, wherein the number-average particle diameter of the beads is not larger than 2.5 times the thickness of the adhesive coat.

10. A laminate film according to one of Claims 1 to 9, wherein the difference in refractive index between material constituting the beads and the adhesive resin material is not more than 0.2.

11. A method of producing a laminate film comprising the steps of:
providing a heat-resistant substrate;
forming a surface coat on the heat-resistant substrate; and
forming an adhesive coat by applying a coating liquid;
wherein the coating liquid comprises an adhesive resin material and beads having a particle diameter distribution having a standard deviation of not more than 10.

12. A lamination method comprising the step of laminating a surface of a record member using the laminate film according to one of Claims 1 to 10.

13. A print comprising a record member, wherein a surface of the record member is laminated using the laminate film according to one of Claims 1 to 10.

14. A print according to Claim 13, wherein the record member has images formed by an inkjet recording process.

15. A print according to Claim 13, wherein the record member comprises a substrate and an ink-receiving layer.
